# EUROPEAN PATENT SPECIFICATION

(11) **EP 4 226 323 B1**
(45) Date of publication and mention of the grant of the patent: **22.04.2026**
(21) Application number: 21787411.4
(22) Date of filing: 06.10.2021
(51) Int. Cl.: G06T 7/20, G06T 7/11

(54) **METHOD FOR DETERMINING A MOTION MODEL OF AN OBJECT IN THE SURROUNDINGS OF A MOTOR VEHICLE, COMPUTER PROGRAM PRODUCT, COMPUTER-READABLE STORAGE MEDIUM, AS WELL AS ASSISTANCE SYSTEM**
VERFAHREN ZUR BESTIMMUNG EINES BEWEGUNGSMODELLS EINES OBJEKTS IN DER UMGEBUNG EINES KRAFTFAHRZEUGS, COMPUTERPROGRAMMPRODUKT, COMPUTERLESBARES SPEICHERMEDIUM, SOWIE ASSISTENZSYSTEM
PROCEDE DE DETERMINATION D'UN MODELE DE MOUVEMENT D'UN OBJET DANS L'ENVIRONNEMENT D'UN VEHICULE AUTOMOBILE, PRODUIT PROGRAMME INFORMATIQUE, SUPPORT DE STOCKAGE LISIBLE PAR ORDINATEUR, AINSI QUE SYSTEME D'ASSISTANCE

(30) Priority: 12.10.2020 DE 102020126690
(43) Date of publication of application: 16.08.2023
(73) Proprietor: Connaught Electronics Ltd., Tuam, County Galway (IE)
(72) Inventor: MARIOTTI, Letizia, Tuam, Galway (IE); YOGAMANI, Senthil, Tuam, Galway (IE); HUGHES, Ciaran, Tuam, Galway (IE); RASHED, Hazem, Giza Cairo (EG)
(74) Representative: Jauregui Urbahn, Kristian
(86) International application number: PCT/EP2021/077506
(87) International publication number: WO 2022/078828

(56) References cited:
- DE-A1- 102018 114 229
- US-A1- 2019 130 580
- REN SHAOQING ET AL: "Faster R-CNN: Towards Real-Time Object Detection with Region Proposal Networks", IEEE TRANSACTIONS ON PATTERN ANALYSIS AND MACHINE INTELLIGENCE, vol. 39, no. 6, 6 January 2016 (2016-01-06), USA, pages 1137 - 1149, XP055847873, ISSN: 0162-8828, DOI: 10.1109/TPAMI.2016.2577031
- SIAM MENNATULLAH ET AL: "MODNet: Motion and Appearance based Moving Object Detection Network for Autonomous Driving", 2018 21ST INTERNATIONAL CONFERENCE ON INTELLIGENT TRANSPORTATION SYSTEMS (ITSC), IEEE, 4 November 2018 (2018-11-04), pages 2859 - 2864, XP033470323, ISBN: 978-1-7281-0321-1, [retrieved on 20181207], DOI: 10.1109/ITSC.2018.8569744
- SIAM MENNATULLAH ET AL: "Motion and Appearance Based Multi-Task Learning Network for Autonomous Driving", NIPS 2017 WORKSHOP MUTS SUBMISSION (READERS: EVERYONE, 31 October 2017 (2017-10-31), pages 1 - 8, XP055857159, Retrieved from the Internet <URL:https://openreview.net/pdf?id=Bk4BBBLRZ> [retrieved on 20211102]
- YIN JUNBO ET AL: "A Unified Object Motion and Affinity Model for Online Multi-Object Tracking", 2020 IEEE/CVF CONFERENCE ON COMPUTER VISION AND PATTERN RECOGNITION (CVPR), IEEE, 13 June 2020 (2020-06-13), pages 6767 - 6776, XP033804824, DOI: 10.1109/CVPR42600.2020.00680
- SCHEIDEGGER SAMUEL ET AL: "Mono-Camera 3D Multi-Object Tracking Using Deep Learning Detections and PMBM Filtering", 2018 IEEE INTELLIGENT VEHICLES SYMPOSIUM (IV), IEEE, 26 June 2018 (2018-06-26), pages 433 - 440, XP033423353, DOI: 10.1109/IVS.2018.8500454
- YU HUANG ET AL: "Autonomous Driving with Deep Learning: A Survey of State-of-Art Technologies", ARXIV.ORG, CORNELL UNIVERSITY LIBRARY, 201 OLIN LIBRARY CORNELL UNIVERSITY ITHACA, NY 14853, 11 June 2020 (2020-06-11), XP081711909

## Description

The invention relates to a method for determining a motion model of a moving object in the surroundings of a motor vehicle by an assistance system of the motor vehicle. Further, the invention relates to a computer program product, a computer-readable storage medium, as well as an assistance system.

From the prior art it is known that moving objects play a dominant role in the capturing of the surroundings in particular in the field of automobile manufacture. In particular moving objects are harder to detect than for instance static objects. The moving objects are so-called interactive agents, which may form a highly dynamic and insecure scenario for the planning, for instance in an at least partially autonomous operation of the motor vehicle or a fully autonomous operation of the motor vehicle. In particular when using a neural network for capturing the surroundings and when generating the motion model it may happen that during a training of the neural network unknown and untrained objects appear since for instance not every object that may be on the roads can be represented. As an example may be regarded kangaroos, for which normally no corresponding motion model is stored. Further, from the prior art it is known that static objects for instance may be determined from a so-called predetermined high definition map.

Document US 2019 370980 AA describes a method for performing a real-time detection of objects in motion, which includes receiving of an input video stream from a camera, checking whether a motion has occurred in a current frame of the input video stream, providing of the current frame for object detection if the motion has been detected therein, detecting a moving object in the current frame, displaying the detected moving object, simultaneously tracking of a location of the detected moving object within the corresponding frame, while continuing the object detection for one or more moving objects, and generating a tracking box and overlaying the tracking box on the detected moving object, and then transmitting the video to the display and continuing the tracking of the recognized moving object until the object detection continues for one or more corresponding moving objects.

Document US 2014 177946 A discloses an apparatus and a method for detecting a person from an input video image with high reliability by using gradient-based feature vectors and a neural network. The human detection apparatus includes an image unit for modelling a background image from an input image. A moving object area setting unit sets a moving object area, in which motion is present by obtaining a difference between the input image and the background image. A human region detection unit extracts gradient-based feature vectors for a whole body and an upper body from the moving object area, and detects a human region in which a person is present by using the gradient-based feature vectors for the whole body and the upper body as input of a neural network classifier. A decision unit decides whether an object in the detected human region is a person or a non-person.

Document CN 104166861 A discloses a method for detection of pedestrians.

The pedestrian detection method comprises the following steps: A pedestrian positive sample set and a pedestrian negative sample set needed for training a convolutional neural network are prepared. The sample sets are preprocessed and normalized to conform to a unified standard, and a data file is generated. The structure of the convolutional neural network is designed, training is carried out, and a weight connection matrix is obtained during convergence of the network. A self-adaptive background modelling is carried out on videos, information of moving objects in each frame is obtained, coarse selection is carried out on detected moving object regions at first , the regions with height to width ratios unsatisfying requirements are excluded, and candidate regions are generated. Each candidate region is input into the convolutional neural network, and whether pedestrians exist is judged.

Document US 2019 005361 AA discloses a technology for detecting and identifying objects in digital images and in particular for detecting, identifying and/or tracking of moving objects in video images using an artificial intelligence neural network configured for deep learning. In one aspect a method comprises capturing a video input of a scene comprising one or more candidate moving objects using a video image capturing device, wherein the video input comprises at least two temporally spaced images captured of the scene. The method additionally includes transforming the video input into one or more image pattern layers, wherein each of the image pattern layers comprises a pattern representing one of the candidate moving objects. The method additionally includes determining a probability of match between each of the image pattern layers and a stored image in a big data library. The method additionally includes adding one or more image pattern layers having the probability of match that exceeds a predetermined level automatically, and outputting the probability of match to a user.

Document CN 108492319 A suggests a moving object detection method based on a deep full-convolutional neural network. The method comprises the implementation steps: extracting a background image of a video scene; obtaining a multichannel video frame sequence; constructing a training sample set and a testing sample set; and carrying out the normalization of the two sample sets; constructing a deep full-convolution neural network model; carrying out the training of the deep neural network model; carrying out the prediction of the testing sample set through the trained deep full-convolution neural network model; obtaining a moving target detection result.

Document DE102018114229 A1 discloses a method for a driver assistance system in a motor vehicle to determine the motion state of an object in its environment. The process involves detecting the environment with a detection device, generating an image, and using a first neural network to evaluate the object's external shape. A second neural network analyzes the optical flow to assess the object's relative movement. The system then creates a movement mask through techniques like transposed folding or pixel-wise classification, and/or a boundary frame predicted across grid cells, considering the vehicle's own motion. These outputs help classify the object (e.g., vehicle type) and its motion state (static or dynamic). Advanced neural network configurations, such as folded architectures and shared weighting, enhance efficiency, enabling precise object tracking for improved safety and autonomous driving capabilities.

The paper by Siam et al., "Motion and Appearance Based Multi-Task Learning Network for Autonomous Driving", presented at the NIPS 2017 Workshop MUTS, introduces a novel two-stream multi-task learning (MTL) network for autonomous driving, jointly addressing object detection, road segmentation, and motion segmentation by integrating motion and appearance cues. Unlike previous works focusing on appearance, this method employs a two-stream VGG16-based architecture, achieving a 21.5% mAP improvement on the extended KITTI MOD dataset, which includes moving/static vehicle annotations and is publicly available. The approach outperforms single-stream CNN-based motion detection (MPNet) and achieves near state-of-the-art results on the non-automotive DAVIS dataset, running at 8 fps on a Titan X GPU, with joint training enhancing accuracy even with limited annotated motion data.

Document US20190130580A1 outlines an apparatus for tracking objects in video frames, utilizing a memory to store frames and a processor to execute a multi-step process. It employs a trained classification network to identify a first set of bounding regions for objects in a video frame, detects blobs (pixel groups representing objects), and generates a second set of bounding regions based on these blobs. The processor combines both sets to create a final set of bounding regions, filtering them by confidence thresholds, object categories, and overlap analysis, while considering scene context (indoor/outdoor) and object size. This final set is used for robust object tracking across video sequences, with selective application of the classification network to optimize efficiency, enhancing accuracy in applications like autonomous driving or surveillance.

The paper "MODNet: Motion and Appearance based Moving Object Detection Network for Autonomous Driving", 2018, 21st International Conference on Intelligent Transportation Systems (ITSC), introduces MODNet, a novel two-stream convolutional neural network for autonomous driving that jointly learns object detection and motion segmentation by integrating motion and appearance cues. Unlike traditional methods that separate motion segmentation (via dense optical flow) and object detection, MODNet uses a shared fusion encoder to improve accuracy, achieving a 21.5% mAP improvement on the custom KITTI MOD dataset, which extends KITTI with static/moving vehicle annotations. The network outperforms the baseline MPNet, a state-of-the-art CNN for motion detection, and achieves near state-of-the-art results on the non-automotive DAVIS dataset. Running at 8 fps on a Titan X GPU with a VGG16 encoder, MODNet demonstrates efficient joint training, leveraging limited motion data for enhanced generalization in detecting critical moving objects like vehicles and pedestrians.

The paper by Shaoqing Ren, Kaiming He, Ross Girshick, and Jian Sun "Faster R-CNN: Towards Real-Time Object Detection with Region Proposal Networks." *Advances in Neural Information Processing Systems (NIPS),* introduces the Region Proposal Network (RPN), a novel method that shares full-image convolutional features with the detection network, significantly reducing the computational cost of region proposals in object detection systems. The RPN, a fully convolutional network, predicts object bounds and objectness scores, generating high-quality region proposals that are then utilized by Fast R-CNN for object detection. The paper demonstrates that merging the RPN and Fast R-CNN into a single, unified network enables near real-time object detection while maintaining state-of-the-art accuracy.

It is the object of the present invention to provide a method, a computer program product, a computer-readable storage medium, as well as an assistance system, by which single moving objects in the surroundings of a motor vehicle may be detected in an improved way.

This object is achieved by a method, a computer program product, a computer-readable storage medium, as well as by an assistance system according to the independent patent claims. Advantageous embodiments are indicated in the subclaims.

One aspect of the invention relates to a method for determining a motion model of a moving object in the surroundings of a motor vehicle by an assistance system of the motor vehicle. A capturing of at least one image of the surroundings with the moving object is performed by a capturing device of the assistance system. The at least one image is encoded by a feature extraction module of a neural network of an electronic computing device of the assistance system. The at least one encoded image is decoded by an object segmentation module of the neural network and a first loss function is generated by the object segmentation module. A decoding of the at least one encoded image is performed by a bounding box estimation module of the neural network and a generating of a second loss function is performed by the bounding box estimation module. The second loss function is decoded depending on the decoding of the at least one image by a motion decoding module of the neural network and a third loss function is generated by the motion decoding module. The motion model is determined depending on at least the first loss function and the third loss function by the neural network.

Thereby it is facilitated that in particular single objects can be detected in an improved way. In particular single moving objects, which are located close to each other, can be detected in an improved way. Thereby a more robust and more accurate motion segmentation may be performed.

In other words a neural network is proposed which in particular may also be referred to as convolutional neural network extracting instances of moving objects and models the respective dynamic motions individually. In order to now provide a more robust design of the neural network, prior information is incorporated into the neural network as "soft constraints".

According to an advantageous embodiment by the bounding box estimation module a three-dimensional bounding box is generated and depending on the three-dimensional bounding box the second loss function is generated. The bounding box may in particular also be referred to as box. In other words a 3D box may be generated by the bounding box estimation module. In particular in addition to this 3D box an orientation of this 3D box can be generated. A 3D box in particular describes a reliable representation of static motor vehicles and moving pedestrians.

It has further turned out to be advantageous if a two-dimensional bounding box is generated by the bounding box estimation module and depending on the two-dimensional bounding box a fourth loss function is generated. In particular the 2D box as well as a confidence value in the image coordinates can be generated. The 2D boxes are optimized by standard loss functions for bounding boxes.

Further, it has turned out if the fourth loss function is transferred to the object segmentation module and the first loss function is generated depending on the fourth loss function. In particular the prediction of the 2D box may be trained by the combination of both the motion as well as the appearance. The 2D boxes are then fused with further information and combined in an adaptive fusion decoder in order to perform the object segmentation. This is optimized in particular by the first loss function. The first loss function is based on the semantic segmentation of pixel-by-pixel cross entropy loss by using the ground truth of the instance-based motion segmentation, in which each moving object is annotated with another value. The adaptive object segmentation module therein provides the robustness if for example one of these inputs is missing since in particular the output of the object segmentation module for the object detection is optimized.

In a further advantageous embodiment the at least one image is analyzed by a spatial transformation module of the neural network and depending on the analyzed image at least the second loss function is generated by the bounding box estimation module. The spatial transformation module may also be referred to as spatial transformer module. In particular thereby a scene geometry of the surroundings can be included, wherein a flat grid may represent the surface of a road and the spatial transformation module is trained in such a way that all information of a camera is linked to form a uniform coordinate system relative to the flat grid. Same is in particular considered by ground truths for the flat grid and the mapping of annotated objects in the three-dimensional space on the basis of extrinsic information and deep information. In particular it may further be envisaged that, even though the assumption of a flat road in many cases already works, also inclined roads may be considered within the spatial transformation module. The flat grid in this connection is subdivided into sub-grids and each grid element has a configurable inclination for an elevation, which angle as output can compensate for non-flat roads.

It is equally advantageous if for generating the second loss function the third loss function is back-propagated from the motion decoding module to the bounding box estimation module. In other words, the motion decoding module as decoder has a recurrent node in order to improve and temporally smooth the estimations of the 3D box and previous estimations of the motion model.

It is further advantageous if a first image is captured at a first point in time and a second image at a second point in time that is later than the first point in time and the first image is encoded by a first feature extraction element of the feature extraction module and the second image is encoded by a second feature extraction element of the feature extraction module and the motion model is determined depending on the first encoded image and the second encoded image. In particular thus a "two-stream Siamese encoder" for consecutive images of a video sequence image may be provided. This encoder has identical weights for the two images so that these can be effectively processed in a rolling buffer mode so that only this encoder is operated in a steady state for one output. This setup further allows the proposed algorithm to be integrated into a multi-task shared encoding system. For instance for the implementation of the encoder Resnet 18 and Resnet 50 may be used.

Further it has turned out to be advantageous if by a geometric auxiliary decoding module of the neural network a sixth loss function with geometric constraints for the object is generated and additionally depending on the sixth loss function the motion model is determined. In particular thus specific geometric restrictions or constraints of the neural network may be predetermined, under which conditions same generates the motion model. In particular these geometric constraints may for instance be determined on the basis of multi-view geometries of cameras, scene priorities based on the real geometry of road scenes, motion priorities based on the motion behavior of vehicles and pedestrians and the temporal consistency of the motion estimation.

In a further advantageous embodiment by an optical flow element of the geometric auxiliary decoding module an optical flow in the at least one image is determined and by a geometric constraint element of the geometric auxiliary decoding module the geometric constraint is determined depending on the determined optical flow. In particular the optical flow, in particular the dense optical flow, may detect a motion per pixel in the image.

Thereby it is facilitated that the encoder learns motion-based features better and does not overfit on appearance cues as the typical dataset mainly contains vehicles and pedestrians as moving objects. Further, the optical flow allows incorporating the multi-view geometry of the cameras. The geometric decoder determines an optical flow and a geometric loss as sixth loss function in order to be able to incorporate epipolar constraints, positive depth/height as constraint and parallel motion constraint.

It is further advantageous if for generating the motion model a geometric mean is formed by the electronic computing device from at least the first loss function and at least the third loss function. In particular it may be envisaged that for generating the motion model the geometric mean may be formed from the first loss function, the second loss function, the third loss function, the fourth loss function, the fifth loss function, and the sixth loss function. The explained field tests (ground truth) may possibly not generate all loss functions simultaneously. In this case the loss functions are marginalized and learned separately using asynchronous back-propagation. Further, a self-supervised learning mechanism may be used, wherein the 3D box along with the motion model of the corresponding object may be re-projected to obtain a coarse two-dimensional segment of the image which then in turn may be matched with the observed object. Since this is not a precise matching, a regulator is used to make use of corresponding tolerances. The self-supervised learning allows the reduction of large data amounts.

It is further advantageous if for determining the motion model of the moving object by means of the motion decoding module six degrees of freedom of the object are determined. In particular these degrees of freedom may comprise the directions dx, dy, dz, as well as the roll angle, the pitch angle, and the yaw angle. These six degrees of freedom are determined for each object or for every property of the moving object. The motion decoding module therein uses the output of the object segmentation module and the 3D box in order to generate an independent motion model for each moving object. The prior information relating to the moving object are encoded. The canonical three-dimensional motion of other objects is in particular either parallel to the motor vehicle or in the same direction, for instance on adjacent lanes or perpendicular to the motor vehicle. Moreover, also further motions may be learned, for instance if the motor vehicle moves itself. In field tests the parallel and perpendicular motions are separately generated and a generic motion model is generated. Then in particular the third loss function is generated based on a six-dimensional vector by field tests of a three-dimensional motion or by the estimated motion. The motion model is generated independently for each object. In particular, however, there is a dependent relationship between the respective motion models of the different objects. It may therefore be envisaged that the motion models of the different objects are merged by a graph neural network. The graph neural network thus enables an end-to-end training for an overall model for a plurality of different moving objects.

A further aspect of the invention relates to a computer program product comprising program code means, which are stored in a computer-readable medium, in order to perform the method for determining a motion model according to the preceding aspect, if the computer program product is executed on a processor of an electronic computing device.

A yet further aspect of the invention relates to a computer-readable storage medium comprising a computer program product, in particular an electronic computing device with a computer program product, according to the preceding aspect.

A yet further aspect of the invention relates to an assistance system for a motor vehicle for determining a motion model of a moving object in the surroundings of the motor vehicle, the assistance system comprising at least one capturing device and comprising an electronic computing device, which comprises a neural network with at least one feature extraction module, one object segmentation module, one bounding box estimation module, and one motion decoding module, wherein the assistance system is configured for performing a method according to the preceding aspect. In particular the method is performed by the assistance system.

A yet further aspect of the invention relates to a motor vehicle comprising an assistance system according to the preceding aspect. The motor vehicle is in particular configured as passenger car. Further, the motor vehicle is configured to be in particular at least partially autonomous, in particular fully autonomous. The assistance system may for instance be employed for the autonomous operation or for an autonomous parking maneuver.

Advantageous embodiments of the method are to be regarded as advantageous embodiments of the computer program product, the computer-readable storage medium, the assistance system, as well as the motor vehicle. The assistance system as well as the motor vehicle in this connection comprise means, which facilitate a performing of the method or an advantageous embodiment thereof.

Further features of the invention are apparent from the claims, the figures and the description of figures. The features and feature combinations mentioned above in the description as well as the features and feature combinations mentioned below in the description of figures and/or shown in the figures alone are usable not only in the respectively specified combination, but also in other combinations without departing from the scope of the invention. Thus, implementations are also to be considered as encompassed and disclosed by the invention, which are not explicitly shown in the figures and explained, but arise from and can be generated by the separated feature combinations from the explained implementations. Implementations and feature combinations are also to be considered as disclosed, which thus do not comprise all of the features of an originally formulated independent claim. Moreover, implementations and feature combinations are to be considered as disclosed, in particular by the implementations set out above, which extend beyond or deviate from the feature combinations set out in the back-references of the claims.

The invention now is explained in further detail by reference to preferred embodiments as well as by reference to the enclosed drawings.

These show in:
- Fig. 1: a schematic plan view of an embodiment of a motor vehicle with an embodiment of an assistance system;
- Fig. 2: a schematic block diagram of an embodiment of the assistance system; and
- Fig. 3: a schematic view of a road scenario.

In the figures identical and functionally identical elements are equipped with the same reference signs.

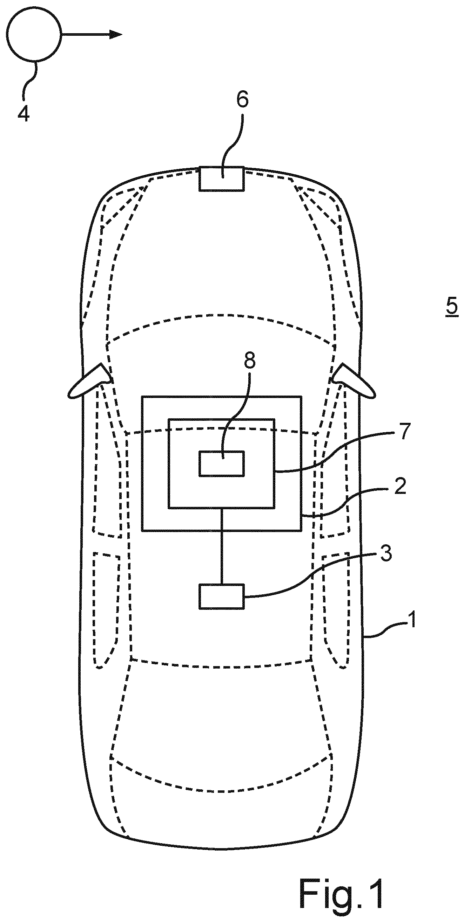

Fig. 1 in a schematic plan view shows an embodiment of a motor vehicle 1 comprising an embodiment of an assistance system 2. The assistance system 2 may for instance be used for an at least partially autonomous parking of the motor vehicle 1. Further, the assistance system 2 may also be used for an autonomous driving operation of the motor vehicle 1. The assistance system 2 is configured to determine a motion model 3 for a moving object 4 in the surroundings 5 of the motor vehicle 1. The assistance system 2 comprises at least one capturing device 6, which in particular may be configured as camera, as well as an electronic computing device 7. The electronic computing device 7 further comprises in particular a neural network 8.

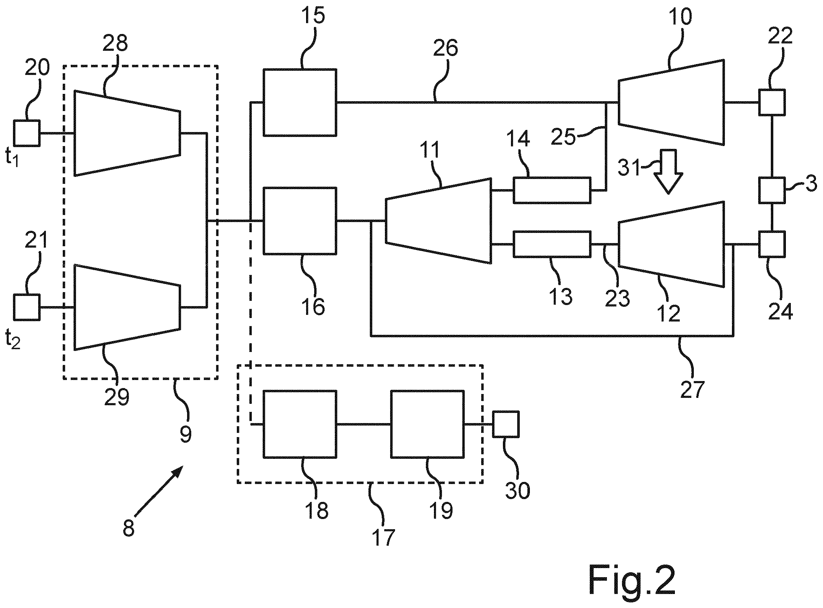

Fig. 2 in a schematic block diagram shows an embodiment of the assistance system 2, in particular of the neural network 8. The neural network 8 comprises at least one feature extraction module 9, one object segmentation module 10, one bounding box estimation module 11, and one motion decoding module 12. By the bounding box estimation module 11 in particular a three-dimensional bounding box 13 is generated. Further, Fig. 2 shows that by the bounding box estimation module 11 a two-dimensional bounding box 14 is generated. Further, the neural network 8 comprises in particular one motion segmentation module 15, one spatial transformation module 16, as well as one geometric auxiliary decoding module 17, wherein the geometric auxiliary decoding module 17 in turn comprises an optical flow element 18 as well as a geometric constraint element 19.

In the method for determining the motion model 3 of the moving object 4 in the surroundings 5 of the motor vehicle 1 by the assistance system 2 at least one capturing of an image 20, 21 of the surroundings 5 with the moving object 4 is performed by means of the capturing device 6 of the assistance system 2. An encoding of the at least one image 20, 21 is performed by the feature extraction module 9 of the neural network 8 of the electronic computing device 7 of the assistance system 2.The at least one encoded image 20, 21 is decoded by the object segmentation module 10 of the neural network 8 and a generating of a first loss function 22 is performed by the object segmentation module 10. The at least one encoded image 20, 21 is decoded by the bounding box estimation module 11 of the neural network 8 and a generating of a second loss function 23 is performed by the bounding box estimation module 11. The second loss function 23 is encoded depending on the decoding of the at least one image 20, 21 by the motion decoding module 12 of the neural network 8 and a generating of a third loss function 24 is performed by the motion decoding module 12. The motion model 3 is generated by the neural network 18 depending on at least the first loss function 22 and the third loss function 24.

In particular Fig. 2 further shows that by the bounding box estimation module 11 the three-dimensional bounding box 13 is generated and depending on the three-dimensional bounding box 13 the second loss function 23 is generated. Further, by the bounding box estimation module 11 the two-dimensional bounding box 14 may be generated and depending on the two-dimensional bounding box 14 a fourth loss function 25 is generated. The fourth loss function 25 in turn may be transferred to the object segmentation module 10 and the first loss function 22 is generated depending on the fourth loss function 25. Further, it is in particular envisaged that the at least one encoded image 20, 21 is decoded by the motion segmentation module 15 of the neural network 18 and a fifth loss function 26 is generated by the motion segmentation module 15 and transferred to the object segmentation module 10 and the first loss function 22 is generated by the object segmentation module 22 depending on the fifth loss function 26.

Further, it is in particular shown that the at least one image 20, 21 is analyzed by the spatial transformation module 16 of the neural network 18 and depending on the analyzed image 20, 21 at least the second loss function 23 is generated by the bounding box estimation module 11.

Further, Fig. 2 shows that for generating the second loss function 23 the third loss function 24 is back-propagated from the motion decoding module 12 to the bounding box estimation module 11, wherein in the present case this is shown in particular by the connection 27.

Moreover it may be envisaged that at least a first image 20 is captured at a first point in time t1 and a second image 21 at a second point in time t2 that is later than the first point in time t1 and the first image 20 is encoded by a first feature extraction element 28 of the feature extraction module 9 and the second image 21 is encoded by a second feature extraction element 29 of the feature extraction module 9 and the motion model 3 is determined depending on the first encoded image 20 and the second encoded image 21. In particular it is further shown that by the geometric auxiliary decoding module 17 of the neural network 8 a sixth loss function 30 with geometric constraints for the object 4 is generated and additionally the motion model 3 is determined depending on the sixth loss function 30. In particular by the optical flow element 18 of the geometric auxiliary decoding module 17 an optical flow in the at least one image 20, 21 may be determined and by the geometric constraint element 19 of the geometric auxiliary decoding module 17 the geometric constraint may be determined depending on the determined optical flow.

The feature extraction module 9 thus is used as "Siamese encoder" for two consecutive images 20, 21 of a video stream. The Siamese encoder uses identical weights for the two images 20, 21 so that these effectively may run in a kind of rolling buffer so that only the encoder in the steady state is used for one output. This setup enables the proposed algorithm also to be integrated into a common multi-task shared encoder system with other tasks.

The motion segmentation module 15 is a binary segmentation decoder optimized for the fifth loss function 26. This decoder is purely optimized for the task of the motion segmentation. The ground truth annotation is based on a two-class segmentation, namely moved and static pixels.

The bounding box estimation module 11 is in particular configured as 2D/3D box decoder and outputs 2D boxes and a confidence value in image coordinates and 3D boxes in world coordinates together with the orientation. 2D boxes are optimized by using the standard bounding box loss function. Further the spatial transformation module 16 is used to incorporate a scene geometry, in which a flat grid may represent the road surface, and the spatial transformer learns to align all cameras with a uniform coordinate system relative to the flat grid. This is taken into consideration by field tests of the flat grid and the mapping of annotated objects in 3D on the basis of extrinsic information and depth estimation. Also inclined roads may be present, which equally may be integrated into the spatial transformation module 16. The flat grid is subdivided into sub-grids and each grid element has a configurable inclination, which may be output to compensate for non-flat roads.

For the object segmentation module 10 the 2D box prediction is trained in such a way that it is a combination of motion and appearance. The 2D boxes are merged with the motion segmentation output of the motion segmentation module 15 by using an adaptive fusion decoder. This is optimized by the first loss function 22. The first loss function 22 is based on a semantic segmentation with pixel-by-pixel cross entropy loss by using field tests of an instance-based motion segmentation, in which each moving object 4 is annotated with a different value. The adaptive fusion facilitates a robustness, if one of the inputs is missing, as the fusion output is for instance optimized for the detection.

The motion decoding module 12 is a module, in which the 3D motion (six degrees of freedom dx, dy, dz, yaw angle, pitch angle, and roll angle) is estimated for each case of a moving object 4. This decoder makes use of the output of the object segmentation module 11, which is represented in particular by the arrow 31, and the output of the 3D box in order to generate an independent motion model 3 for each moving object 4. This decoder also has a back-propagation in order to improve and temporally smooth the estimations of the 3D box. Prior information as to the motion model 3 are used, such as for instance a canonical 3D motion of other objects 4, which are either parallel to the motor vehicle 1 on the same or adjacent lanes or perpendicular thereto. Even though there are also other motions, such as for instance a rotation/turning of the motor vehicle 1, it is advantageous to specialize and learn these motions separately. By field tests the parallel and the perpendicular motions are separated and a generic motion model 3 is generated also for the other cases. The motion model 3 is modelled independently for each object 4. However, there is a dependence of the motion models 3. The motion models 3 of the individual objects 4 may therefore be merged for instance via a graph neural network. The modelling via the graph neural network facilitates an end-to-end training for the complete model.

In the geometric auxiliary decoding module 17 a dense optical flow is generated on the basis of an image-based motion per pixel. Thereby the encoder is forced to learn motion-based features better and not to overfit on appearance cues/ since the typical dataset mainly contains vehicles and pedestrians as moving objects 4. Moreover, the optical flow allows the incorporation of geometric constraints for several views. The proposed geometric decoder computes the dense optical flow and a geometric loss, in particular the sixth loss function 30, is determined in order to integrate epipolar constraints, positive depth/height constraint, and parallel motion constraint.

The overall loss function is in particular a geometric product of the individual loss functions 22, 23, 24, 25, 26, 30. The corresponding field tests possibly are not available for all these loss functions 22, 23, 24, 25, 26, 30 simultaneously. In this case they can be marginalized and learned separately by using an asynchronous back-propagation. Further, a self-supervised learning is proposed, in which the 3D box together with the motion model 3 of the corresponding object 4 can be newly projected in order to obtain a coarse 2D segment on the image which matches the observed object 4. Since this is not a precise matching, a regulator for the matching is used in order to allow tolerances. The self-supervised learning facilitates compensating for a lack of large data amounts.

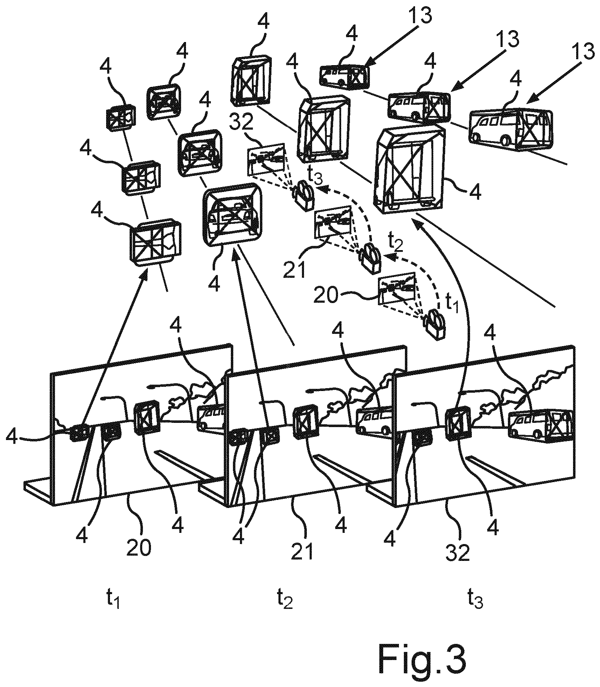

Fig. 3 shows a schematic perspective view of a road scenario. On the one hand, in front of the motor vehicle 1 on the right lane there is a further motor vehicle, which is represented as a van. In front of the motor vehicle 1 on the same lane there is yet a further motor vehicle. On the oncoming lane of the motor vehicle 1 there is a further motor vehicle oncoming. Each of the three motor vehicles is assigned a 3D box. In Fig. 3 the positions of the three motor vehicles at three different points in time are shown. Fig. 3 thus shows how an object tracking is facilitated by the method according to the invention.

## Claims

1. Method for determining a motion model (3) of a moving object (4) in the surroundings (5) of a motor vehicle (1) by an assistance system (2) of the motor vehicle (1), the method including the steps:
- capturing an image (20, 21) of the surroundings (5) with the moving object (4) by a capturing device (6) of the assistance system (2);
- encoding the at least one image (20, 21) by a feature extraction module (9) of a neural network (8) of an electronic computing device (7) of the assistance system (2);
- decoding the at least one encoded image (20, 21) by an object segmentation module (10) of the neural network (8) and generating a first loss function (22) by the object segmentation module (10);
- decoding the at least one encoded image (20, 21) by a bounding box estimation module (11) of the neural network (8) and generating a second loss function (23) by the bounding box estimation module (11);
- decoding the second loss function (23) depending on the decoding of the at least one image (20, 21) by a motion decoding module (12) of the neural network (8) and generating a third loss function (24) by means of the motion decoding module (12); and
- determining the motion model (3) depending on at least the first loss function (22) and the third loss function (24) by the neural network (8).

2. Method according to claim 1,
**characterized in that**
by the bounding box estimation module (11) a three-dimensional bounding box (13) is generated and depending on the three-dimensional bounding box (13) the second loss function (24) is generated.

3. Method according to claim 1 or 2,
**characterized in that**
by the bounding box estimation module (11) a two-dimensional bounding box (14) is generated and depending on the two-dimensional bounding box (14) a fourth loss function (25) is generated.

4. Method according to claim 3,
**characterized in that**
the fourth loss function (25) is transferred to the object segmentation module (10) and the first loss function (22) is generated depending on the fourth loss function (25).

5. Method according to any one of the preceding claims,
**characterized in that**
the at least one encoded image (20, 21) is decoded by a motion segmentation module (15) of the neural network (8) and a fifth loss function (26) is generated by the motion segmentation module (15) and transferred to the object segmentation module (10) and the first loss function (22) is generated by the object segmentation module (10) depending on the fifth loss function (26).

6. Method according to any one of the preceding claims,
**characterized in that**
the at least one image (20, 21) is analyzed by a spatial transformation module (16) of the neural network (8) and depending on the analyzed image (20, 21) at least the second loss function (23) is generated by the bounding box estimation module (11).

7. Method according to any one of the preceding claims,
**characterized in that**
for generating the second loss function (23) the third loss function (24) is back-propagated from the motion decoding module (12) to the bounding box estimation module (11).

8. Method according to any one of the preceding claims,
**characterized in that**
a first image (20) is captured at a first point in time (t1) and a second image (21) at a second point in time (t2) that is later than the first point in time (t1) and the first image (20) is encoded by a first feature extraction element (28) of the feature extraction module (9) and the second image (21) is encoded by a second feature extraction element (29) of the feature extraction module (9) and the motion model (3) is determined depending on the first encoded image (20) and the second encoded image (21).

9. Method according to any one of the preceding claims,
**characterized in that**
by means of a geometric auxiliary decoding module (17) of the neural network (8) a sixth loss function (30) with geometric constraints for the object (4) is generated and additionally depending on the sixth loss function (30) the motion model (3) is determined.

10. Method according to claim 9,
**characterized in that**
by an optical flow element (18) of the geometric auxiliary decoding module (17) an optical flow in the at least one image (20, 21) is determined and by a geometric constraint element (19) of the geometric auxiliary decoding module (17) the geometric constraint is determined depending on the determined optical flow.

11. Method according to any one of the preceding claims,
**characterized in that**
for generating the motion model (3) a geometric mean is formed from at least the first loss function (22) and at least the third loss function (24) by the electronic computing device (7).

12. Method according to any one of the preceding claims,
**characterized in that**
for determining the motion model (3) of the moving object (4) by the motion decoding module (12) six degrees of freedom of the object (4) are determined.

13. Computer program product with program code means, which are stored in a computer-readable medium, in order to perform the method according to any one of the preceding claims 1 to 12, if the computer program product is executed on a processor of an electronic computing device (7).

14. Computer-readable storage medium comprising a computer program product according to claim 13.

15. Assistance system (2) for a motor vehicle (1) for determining a motion model (3) of a moving object (4) in the surroundings (5) of the motor vehicle (1), the assistance system (2) comprising at least one capturing device (6) and comprising an electronic computing device (7), which comprises a neural network (8) with at least one feature extraction module (9), one object segmentation module (10), one bounding box estimation module (11), and one motion decoding module (12), wherein the assistance system (2) is configured for performing a method according to any one of claims 1 to 12.

## Patentansprüche

1. Verfahren zur Bestimmung eines Bewegungsmodells (3) eines sich bewegenden Objekts (4) in der Umgebung (5) eines Kraftfahrzeugs (1) durch ein Assistenzsystem (2) des Kraftfahrzeugs (1), wobei das Verfahren die folgenden Schritte umfasst:
- Erfassen eines Bildes (20, 21) der Umgebung (5) mit dem sich bewegenden Objekt (4) durch eine Erfassungsvorrichtung (6) des Assistenzsystems (2);
- Codieren des mindestens einen Bildes (20, 21) durch ein Merkmalsextraktionsmodul (9) eines neuronalen Netzwerks (8) einer elektronischen Rechenvorrichtung (7) des Assistenzsystems (2);
- Decodieren des mindestens einen codierten Bildes (20, 21) durch ein Objektsegmentierungsmodul (10) des neuronalen Netzwerks (8) und Erzeugen einer ersten Verlustfunktion (22) durch das Objektsegmentierungsmodul (10);
- Decodieren des mindestens einen codierten Bildes (20, 21) durch ein Begrenzungsrahmen-Schätzmodul (11) des neuronalen Netzwerks (8) und Erzeugen einer zweiten Verlustfunktion (23) durch das Begrenzungsrahmen-Schätzmodul (11);
- Decodieren der zweiten Verlustfunktion (23) in Abhängigkeit von der Decodierung des mindestens einen Bildes (20, 21) durch ein Bewegungsdecodierungsmodul (12) des neuronalen Netzwerks (8) und Erzeugen einer dritten Verlustfunktion (24) mittels des Bewegungsdecodierungsmoduls (12); und
- Bestimmen des Bewegungsmodells (3) in Abhängigkeit von mindestens der ersten Verlustfunktion (22) und der dritten Verlustfunktion (24) durch das neuronale Netzwerk (8).

2. Verfahren nach Anspruch 1, **dadurch gekennzeichnet, dass** durch das Begrenzungsrahmen-Schätzmodul (11) ein dreidimensionaler Begrenzungsrahmen (13) erzeugt wird und in Abhängigkeit von dem dreidimensionalen Begrenzungsrahmen (13) die zweite Verlustfunktion (24) erzeugt wird.

3. Verfahren nach Anspruch 1 oder 2, **dadurch gekennzeichnet, dass** durch das Begrenzungsrahmen-Schätzmodul (11) ein zweidimensionaler Begrenzungsrahmen (14) erzeugt wird und in Abhängigkeit von dem zweidimensionalen Begrenzungsrahmen (14) eine vierte Verlustfunktion (25) erzeugt wird.

4. Verfahren nach Anspruch 3, **dadurch gekennzeichnet, dass** die vierte Verlustfunktion (25) an das Objektsegmentierungsmodul (10) übertragen wird und die erste Verlustfunktion (22) in Abhängigkeit von der vierten Verlustfunktion (25) erzeugt wird.

5. Verfahren nach einem der vorhergehenden Ansprüche, **dadurch gekennzeichnet, dass** das mindestens eine codierte Bild (20, 21) durch ein Bewegungssegmentierungsmodul (15) des neuronalen Netzwerks (8) decodiert wird und eine fünfte Verlustfunktion (26) durch das Bewegungssegmentierungsmodul (15) erzeugt und an das Objektsegmentierungsmodul (10) übertragen wird und die erste Verlustfunktion (22) durch das Objektsegmentierungsmodul (10) in Abhängigkeit von der fünften Verlustfunktion (26) erzeugt wird.

6. Verfahren nach einem der vorhergehenden Ansprüche, **dadurch gekennzeichnet, dass** das mindestens eine Bild (20, 21) durch ein räumliches Transformationsmodul (16) des neuronalen Netzwerks (8) analysiert wird und in Abhängigkeit von dem analysierten Bild (20, 21) mindestens die zweite Verlustfunktion (23) durch das Begrenzungsrahmen-Schätzmodul (11) erzeugt wird.

7. Verfahren nach einem der vorhergehenden Ansprüche, **dadurch gekennzeichnet, dass** zum Erzeugen der zweiten Verlustfunktion (23) die dritte Verlustfunktion (24) vom Bewegungsdecodierungsmodul (12) zum Begrenzungsrahmen-Schätzmodul (11) zurückpropagiert wird.

8. Verfahren nach einem der vorhergehenden Ansprüche, **dadurch gekennzeichnet, dass** ein erstes Bild (20) zu einem ersten Zeitpunkt (t1) und ein zweites Bild (21) zu einem zweiten Zeitpunkt (t2), der später als der erste Zeitpunkt (t1) ist, erfasst wird und das erste Bild (20) durch ein erstes Merkmalsextraktionselement (28) des Merkmalsextraktionsmoduls (9) codiert wird und das zweite Bild (21) durch ein zweites Merkmalsextraktionselement (29) des Merkmalsextraktionsmoduls (9) codiert wird und das Bewegungsmodell (3) in Abhängigkeit von dem ersten codierten Bild (20) und dem zweiten codierten Bild (21) bestimmt wird.

9. Verfahren nach einem der vorhergehenden Ansprüche, **dadurch gekennzeichnet, dass** mittels eines geometrischen Hilfsdecodierungsmoduls (17) des neuronalen Netzwerks (8) eine sechste Verlustfunktion (30) mit geometrischen Einschränkungen für das Objekt (4) erzeugt wird und zusätzlich in Abhängigkeit von der sechsten Verlustfunktion (30) das Bewegungsmodell (3) bestimmt wird.

10. Verfahren nach Anspruch 9, **dadurch gekennzeichnet, dass** durch ein optisches Flusselement (18) des geometrischen Hilfsdecodierungsmoduls (17) ein optischer Fluss in dem mindestens einen Bild (20, 21) bestimmt wird und durch ein geometrisches Einschränkungselement (19) des geometrischen Hilfsdecodierungsmoduls (17) die geometrische Einschränkung in Abhängigkeit von dem bestimmten optischen Fluss bestimmt wird.

11. Verfahren nach einem der vorhergehenden Ansprüche, **dadurch gekennzeichnet, dass** zum Erzeugen des Bewegungsmodells (3) ein geometrisches Mittel aus mindestens der ersten Verlustfunktion (22) und mindestens der dritten Verlustfunktion (24) durch die elektronische Rechenvorrichtung (7) gebildet wird.

12. Verfahren nach einem der vorhergehenden Ansprüche, **dadurch gekennzeichnet, dass** zur Bestimmung des Bewegungsmodells (3) des sich bewegenden Objekts (4) durch das Bewegungsdecodierungsmodul (12) sechs Freiheitsgrade des Objekts (4) bestimmt werden.

13. Computerprogrammprodukt mit Programmcodemitteln, die auf einem computerlesbaren Medium gespeichert sind, um das Verfahren nach einem der vorhergehenden Ansprüche 1 bis 12 durchzuführen, wenn das Computerprogrammprodukt auf einem Prozessor einer elektronischen Rechenvorrichtung (7) ausgeführt wird.

14. Computerlesbares Speichermedium, das ein Computerprogrammprodukt nach Anspruch 13 umfasst.

15. Assistenzsystem (2) für ein Kraftfahrzeug (1) zur Bestimmung eines Bewegungsmodells (3) eines sich bewegenden Objekts (4) in der Umgebung (5) des Kraftfahrzeugs (1), wobei das Assistenzsystem (2) mindestens eine Erfassungsvorrichtung (6) und eine elektronische Rechenvorrichtung (7) umfasst, die ein neuronales Netzwerk (8) mit mindestens einem Merkmalsextraktionsmodul (9), einem Objektsegmentierungsmodul (10), einem Begrenzungsrahmen-Schätzmodul (11) und einem Bewegungsdecodierungsmodul (12) umfasst, wobei das Assistenzsystem (2) zur Durchführung eines Verfahrens nach einem der Ansprüche 1 bis 12 konfiguriert ist.

## Revendications

1. Procédé pour déterminer un modèle de mouvement (3) d'un objet mobile (4) dans l'environnement (5) d'un véhicule automobile (1) par un système d'assistance (2) du véhicule automobile (1), le procédé comprenant les étapes suivantes :
- capturer une image (20, 21) de l'environnement (5) avec l'objet mobile (4) par un dispositif de capture (6) du système d'assistance (2) ;
- encoder l'au moins une image (20, 21) par un module d'extraction de caractéristiques (9) d'un réseau neuronal (8) d'un dispositif de calcul électronique (7) du système d'assistance (2) ;
- décoder l'au moins une image encodée (20, 21) par un module de segmentation d'objet (10) du réseau neuronal (8) et générer une première fonction de perte (22) par le module de segmentation d'objet (10) ;
- décoder l'au moins une image encodée (20, 21) par un module d'estimation de boîte englobante (11) du réseau neuronal (8) et générer une deuxième fonction de perte (23) par le module d'estimation de boîte englobante (11) ;
- décoder la deuxième fonction de perte (23) en fonction du décodage de l'au moins une image (20, 21) par un module de décodage de mouvement (12) du réseau neuronal (8) et générer une troisième fonction de perte (24) au moyen du module de décodage de mouvement (12) ; et
- déterminer le modèle de mouvement (3) en fonction d'au moins la première fonction de perte (22) et la troisième fonction de perte (24) par le réseau neuronal (8).

2. Procédé selon la revendication 1, **caractérisé en ce que** par le module d'estimation de boîte englobante (11) une boîte englobante tridimensionnelle (13) est générée et en fonction de la boîte englobante tridimensionnelle (13) la deuxième fonction de perte (24) est générée.

3. Procédé selon la revendication 1 ou 2, **caractérisé en ce que** par le module d'estimation de boîte englobante (11) une boîte englobante bidimensionnelle (14) est générée et en fonction de la boîte englobante bidimensionnelle (14) une quatrième fonction de perte (25) est générée.

4. Procédé selon la revendication 3, **caractérisé en ce que** la quatrième fonction de perte (25) est transférée au module de segmentation d'objet (10) et la première fonction de perte (22) est générée en fonction de la quatrième fonction de perte (25).

5. Procédé selon l'une quelconque des revendications précédentes, **caractérisé en ce que** l'au moins une image encodée (20, 21) est décodée par un module de segmentation de mouvement (15) du réseau neuronal (8) et une cinquième fonction de perte (26) est générée par le module de segmentation de mouvement (15) et transférée au module de segmentation d'objet (10) et la première fonction de perte (22) est générée par le module de segmentation d'objet (10) en fonction de la cinquième fonction de perte (26).

6. Procédé selon l'une quelconque des revendications précédentes, **caractérisé en ce que** l'au moins une image (20, 21) est analysée par un module de transformation spatiale (16) du réseau neuronal (8) et en fonction de l'image analysée (20, 21) au moins la deuxième fonction de perte (23) est générée par le module d'estimation de boîte englobante (11).

7. Procédé selon l'une quelconque des revendications précédentes, **caractérisé en ce que** pour générer la deuxième fonction de perte (23), la troisième fonction de perte (24) est rétropropagée du module de décodage de mouvement (12) au module d'estimation de boîte englobante (11).

8. Procédé selon l'une quelconque des revendications précédentes, **caractérisé en ce qu'**une première image (20) est capturée à un premier instant (t1) et une deuxième image (21) à un deuxième instant (t2) qui est postérieur au premier instant (t1) et la première image (20) est encodée par un premier élément d'extraction de caractéristiques (28) du module d'extraction
de caractéristiques (9) et la deuxième image (21) est encodée par un deuxième élément d'extraction de caractéristiques (29) du module d'extraction de caractéristiques (9) et le modèle de mouvement (3) est déterminé en fonction de la première image encodée (20) et de la deuxième image encodée (21).

9. Procédé selon l'une quelconque des revendications précédentes, **caractérisé en ce qu'**au moyen d'un module de décodage auxiliaire géométrique (17) du réseau neuronal (8), une sixième fonction de perte (30) avec des contraintes géométriques pour l'objet (4) est générée et, en fonction additionnellement de la sixième fonction de perte (30), le modèle de mouvement (3) est déterminé.

10. Procédé selon la revendication 9, **caractérisé en ce que** par un élément de flux optique (18) du module de décodage auxiliaire géométrique (17), un flux optique dans l'au moins une image (20, 21) est déterminé et par un élément de contrainte géométrique (19) du module de décodage auxiliaire géométrique (17), la contrainte géométrique est déterminée en fonction du flux optique déterminé.

11. Procédé selon l'une quelconque des revendications précédentes, **caractérisé en ce que** pour générer le modèle de mouvement (3), une moyenne géométrique est formée à partir d'au moins la première fonction de perte (22) et au moins la troisième fonction de perte (24) par le dispositif de calcul électronique (7).

12. Procédé selon l'une quelconque des revendications précédentes, **caractérisé en ce que** pour déterminer le modèle de mouvement (3) de l'objet mobile (4) par le module de décodage de mouvement (12), six degrés de liberté de l'objet (4) sont déterminés.

13. Produit de programme informatique avec des moyens de code de programme, qui sont stockés dans un support lisible par ordinateur, afin d'exécuter le procédé selon l'une quelconque des revendications précédentes 1 à 12, si le produit de programme informatique est exécuté sur un processeur d'un dispositif de calcul électronique (7).

14. Support de stockage lisible par ordinateur comprenant un produit de programme informatique selon la revendication 13.

15. Système d'assistance (2) pour un véhicule automobile (1) pour déterminer un modèle de mouvement (3) d'un objet mobile (4) dans l'environnement (5) du véhicule automobile (1), le système d'assistance (2) comprenant au moins un dispositif de capture (6) et comprenant un dispositif de calcul électronique (7), qui comprend un réseau neuronal (8) avec au moins un module d'extraction de caractéristiques (9), un module de segmentation d'objet (10), un module d'estimation de boîte englobante (11), et un module de décodage de mouvement (12), dans lequel le système d'assistance (2) est configuré pour exécuter un procédé selon l'une quelconque des revendications 1 à 12.
